# EUROPÄISCHE PATENTSCHRIFT

(11) **EP 2 157 674 B1**
(45) Veröffentlichungstag und Bekanntmachung des Hinweises auf die Patenterteilung: **19.10.2011**
(21) Anmeldenummer: 09168217.9
(22) Anmeldetag: 19.08.2009
(51) Int. Cl.: H02G 3/32

(54) **Vorrichtung zur Führung von Kabeln**
Device for guiding cables
Dispositif destiné au guidage de câbles

(30) Priorität: 20.08.2008 CH 13162008
(43) Veröffentlichungstag der Anmeldung: 24.02.2010
(73) Patentinhaber: Zurecon AG, 8003 Zürich (CH)
(72) Erfinder: Pfluger, Gerd, CH-4625, Oberbuchsiten (CH)
(74) Vertreter: Rutz & Partner

(56) Entgegenhaltungen:
- EP-A- 0 355 081
- DE-U1- 9 212 778
- FR-A- 1 390 010

## Beschreibung

Die Erfindung betrifft eine Vorrichtung zur Führung von Kabel, die insbesondere innerhalb eines Gebäudes entlang eines geeigneten Verkehrswegs zu installieren sind.

In Gewerbe- Industrie- und Verwaltungsgebäuden werden Kabel, insbesondere Kabel für Stark- und Schwachstromnetze, infolge fehlender Eigenstabilität in Kabelkanälen geführt, beispielsweise von einem Schaltfeld einer Zentrale zu den Verbrauchern. Kabelkanäle dieser Art sind beispielsweise aus [1], Produktkatalog der LANZ OENSINGEN AG, Januar 2006, bekannt.

In [1], Seite 8 sind Gitterbahnen, in Seite 16 und Seite 34 sind sogenannte Weitspann-Multibahnen gezeigt, die je nach der Art und Menge der zu verlegenden Kabel und der vorliegenden Gebäudeverhältnisse zur Anwendung kommen.

Für die Installation von leichten Kabeln in geringer Anzahl werden kleinere Kabelkanäle verwendet, die z.B. an einer Schiene befestigt werden, wie dies in [2], EP 0 355 081 B1 beschrieben ist. Für die Installation von schwerem Kabelmaterial sind solche Kabelkanäle ungeeignet.

Für die Installation von schweren Kabeln werden beispielsweise Kabelführungsvorrichtungen verwendet, wie sie aus [3], EP 1 594 204 B1 bekannt sind. Wie dies in [3] beschrieben ist, besteht das zur Montage an Decken dienende Trägermaterial solcher Kabelführungsvorrichtungen normalerweise aus einer sogenannten Deckenstütze, mit der ein sogenannter Ausleger verbunden ist. Auf den waagrecht ausgerichteten Ausleger wird in der Folge eine Kabelbahn abgelegt, die der Aufnahme des Kabelmaterials dient.

Die normalerweise aus verzinktem oder rostfreiem Stahl bestehende Deckenstütze weist eine mit der Decke verschraubbare Platte auf, die mit einem meist gelochten, stab- oder rohrförmigen Profilteil verschweisst, verschraubt oder auf eine andere Art fest verbunden ist.

Nach der Montage der Deckenstütze wird der Ausleger auf passender Höhe mit einer Seitenwand des Profilteils verschraubt oder darin eingehängt.

Aufgrund der schweren Lasten sind Deckenstützen dieser Art hohen Belastungen ausgesetzt, weshalb entsprechend gross dimensionierte Vorrichtungen aus verhältnismässig dickem Stahlblech benötigt werden. Insbesondere die genannte Verbindung mit dem Ausleger erfordert die Fertigung des Profilteils aus massivem Blech. Dies insbesondere deshalb, weil durch den Ausleger hohe Kräfte und Momente auf die Befestigungszone am Profilteil, d.h. dem Ort der Krafteinleitung einwirken, welche zur Deformationen und Zerstörung des Profilteils führen können.

Insgesamt resultieren für die Fertigung und Montage der Kabelführungsvorrichtung ein beträchtlicher Arbeits- und Materialaufwand. Nachteilig ist ferner, dass derartige Kabelführungsvorrichtungen, insbesondere wegen der Deckenstütze, welche die Kabelbahn nach unten stets überragt, und der von unten ebenfalls sichtbaren Ausleger, ästhetisch unvorteilhaft in Erscheinung treten. Dies insbesondere dann, wenn eine Kabelbahn im Bereich der Decke eines genutzten Raumes sichtbar geführt ist, der beispielsweise mit technischen Stilmitteln ausgestaltet werden soll.

Der vorliegenden Erfindung liegt daher die Aufgabe zugrunde, eine verbesserte Kabelführungsvorrichtung zu schaffen. Insbesondere ist eine an einer Wand oder an einer Decke montierbare Kabelführungsvorrichtung zu schaffen, welche ästhetisch vorteilhaft in Erscheinung tritt.

Die Kabelführungsvorrichtung soll ferner kostengünstiger herstellbar und einfacher montierbar sein.

Die Kabelführungsvorrichtung soll zudem zum Tragen relativ grosser Lasten geeignet sein, bei vergleichsweise geringen Abmessungen.

Diese Aufgaben werden mit einer Kabelführungsvorrichtung gelöst, welche die in Anspruch 1 angegebenen Merkmale aufweist. Vorteilhafte Ausgestaltungen der Erfindung sind in weiteren Ansprüchen angegeben.

Die Kabelführungsvorrichtung weist eine der Aufnahme von Kabel dienende Kabelbahn auf, die im Wesentlichen aus einem Mittelteil sowie einem ersten und einem zweiten Seitenteil besteht, von denen das erste Seitenteil von einer Stützvorrichtung gehalten ist, die mittels wenigstens einer Montageschraube an einer Wand oder einer Decke montierbar ist. Erfindungsgemäss ist ein Verbindungselement vorgesehen, das an einem ersten Ende wenigstens ein mit dem zweiten Seitenteil der Kabelbahn verbindbares erstes Kopplungsstück und an einem zweiten Ende wenigstens ein oberhalb der Kabelbahn mit der Stützvorrichtung verbindbares zweites Kopplungsstück aufweist, und dessen Länge und Neigung derart gewählt sind, dass der installierte Kabelkanal zumindest annähernd waagerecht gehalten ist.

Die erfindungsgemässe Lösung erlaubt daher eine praktisch schwebende Installation der Kabelbahn. Es werden keine Ausleger verwendet, weshalb die Kabelbahn unten keine ästhetisch störenden Montageelemente aufweist. Da kein Ausleger notwendig ist, kann das Mittelteil der Kabelbahn zudem unterhalb des unteren Endstücks der Stützvorrichtung gehalten werden, so dass lediglich die Kabelbahn selbst optisch wahrnehmbar ist.

Durch die Neigung des Verbindungselements gelingt es, einen wesentlichen Teil der im Bereich des zweiten Seitenteils auftretenden, durch die Kabel einwirkenden Schwerkraft auf die Stützvorrichtung zu übertragen. Auf die Stützvorrichtung wirken im Bereich der Verbindung mit dem ersten Seitenteil und im Bereich der Verbindung mit dem Verbindungselement daher im Wesentlichen Zugkräfte auf, welche das Profilelement der Stützvorrichtung kaum deformieren können. Aufgrund der Vermeidung punktuell einwirkender hoher Momente gelingt es mit der erfindungsgemässen Kabelführungsvorrichtungen somit, relativ hohe Kabellasten aufzunehmen.

Die Kabelbahn, die vorzugsweise ein U-Profil aufweist, kann beliebig ausgestaltet sein. Besonders vorteilhaft ist die Ausgestaltung mit einer Gitterstruktur, welche Strukturelemente, nämlich Querstege und Längsstege aufweist, die leicht mit entsprechenden, vorzugsweise hakenförmigen Kopplungselementen der Stützvorrichtung und des Verbindungselements koppelbar sind.

Ferner können auch Kabelbahnen verwendet werden, die einstückig aus vorzugsweise gelochtem Blech gefertigt sind. Sofern die Seitenwände derartiger Kabelbahnen oben entsprechend geformt sind, können sie ebenfalls leicht mit der Stützvorrichtung und dem Verbindungselement gekoppelt werden. Ferner können an der Stützvorrichtung vorgesehene Haken in Öffnungen der Kabelbahnen eingeführt werden. Alternativ können auch an Kabelbahnen Haken eingeformt werden, die in Öffnungen in den Stützvorrichtungen einführbar sind.

Besonders vorteilhaft ist ferner die Verwendung einer Kabelbahn, die Seitenteile aus Blech aufweist, die durch Metallstege miteinander verbunden sind. Durch die Wahl von Metallstegen mit entsprechender Festigkeit wird gewährleistet, dass sich die Kabelbahn selbst unter einer hohen Last der eingelegten Kabel nicht verbiegen kann. Bei der Verwendung einer Gitterstruktur können Querstege mit höherer Festigkeit verwendet werden. Zur Reduktion der Belastung der Gitterstruktur ist es ferner möglich, das Verbindungselement nicht nur mit einem, sondern mit zwei oder mehreren Längsstegen des zweiten Seitenteils der Kabelbahn zu koppeln.

Die erfindungsgemässe Lösung erlaubt daher die Herstellung und Installation von einfach ausgestalteten Kabelbahnen mit relativ grossen Kanalbreiten und grossem Fassungsvermögen.

Sofern die Kabelbahn eine Gitterstruktur aufweist, so werden die Längsstege wenigstens am ersten Seitenteil vorzugsweise mit einem gegenseitigen Abstand vorgesehen, der gleich einem ganzzahligen Vielfachen n (n = 1; 2; ...) des Abstandes a zwischen zwei Haken einer Reihe von Haken mit untereinander gleichen Abständen ist. Dadurch wird gewährleistet, dass jeweils zwei oder mehrere Längsstege von einer Stützvorrichtung gehalten werden können.

In einer vorzugsweisen Ausgestaltung weist die Stützvorrichtung wenigstens ein U-Profil mit einem Mittelstück und zwei senkrecht dazu stehenden Schenkeln auf, welche je mit einer Reihe von Haken versehen sind. Der Abstand zwischen den Schenkeln der Stützvorrichtung wird dabei vorzugsweise derart bemessen, dass dazwischen zwei Querstege einsetzbar sind, die in den Endbereichen von getrennten, stirnseitig aneinandergereihten Kabelbahnen vorgesehen sind. Eine derart ausgestaltete Stützvorrichtung dient daher auch der Kopplung von Kabelbahnen, welche sowohl von der Stützvorrichtung, als auch vom Verbindungselement in gleicher Weise gehalten werden. Dazu wird ein mehrarmiges Verbindungselement vorgesehen, welches in beide Kabelbahnen eingreifen kann. Ein solches Verbindungselement wird jedoch auch zum Halten nur einer Kabelbahn vorzugsweise eingesetzt.

Für die Deckenmontage wird vorzugsweise eine Stützvorrichtung mit einem Kopfstück, vorzugsweise einer Montageplatte, vorgesehen, welche mit wenigstens einem mit Haken versehenen Profil, vorzugsweise einem U-Profil, verbunden ist. Besonders vorteilhaft ist die Verwendung einer Stützvorrichtung, die zwei Rücken an Rücken aneinander anliegenden, mit Haken versehene Profile, vorzugsweise U-Profile, aufweist. Mittels dieser Stützvorrichtung, deren Kopfstück mit der Decke verschraubt wird, kann auf beiden Seiten wenigstens je eine Kabelbahn, auf gleicher oder unterschiedlicher Höhe gehalten werden. Möglich ist ferner, dass wenigstens auf einer Seite zwei oder mehrere Kabelbahnen mit der Stützvorrichtung verbunden werden.

Das Verbindungselement weist vorzugsweise zwei durch ein Mittelstück miteinander verbundene Arme auf, an deren Enden die ersten Kopplungsstücke vorgesehen sind, die mit dem zweiten Seitenteil der Kabelbahn gekoppelt werden. Das Mittelstück des Verbindungselements dient als zweites Kopplungsstück, welches in eine Reihe oder in zwei Reihen von Haken der Stützvorrichtung eingehängt werden kann.

Vorzugsweise wird das Verbindungselement aus einem drahtförmigen oder aus einem plattenförmigen Metallstück geformt. Ein Metalldraht kann mit einfachen Verfahrenschritten zu einem Bügel mit hakenförmigen Endstücken gebogen werden. Noch einfacher kann das Verbindungselement aus einem plattenförmigen Metallstück ausgestanzt und mit Kopplungselementen versehen werden. Beispielsweise werden Öffnungen vorgesehen, die in die Haken der Stützvorrichtung eingehängt werden können.

Nachfolgend wird die Erfindung, einschliesslich weiterer vorzugsweiser Ausgestaltungen, anhand von Zeichnungen beispielsweise näher erläutert. Dabei zeigt:
- Fig. 1: eine erfindungsgemässe Kabelführungsvorrichtung mit einer an einer Wand 61 montierten, mit Haken 21 versehenen Stützvorrichtung 2 und einer Kabelbahn 1 mit einer Gitterstruktur, deren erstes Seitenteil 10A in die Haken 21 der Stützvorrichtung 2 eingehängt ist und deren zweites Seitenteil 10B mittels eines oberhalb der Kabelbahn 1 installierten Verbindungselements 3 mit der Stützvorrichtung verbunden ist;
- Fig. 2: die Kabelführungsvorrichtung von Figur 1 in räumlicher Darstellung;
- Fig. 3: eine erfindungsgemässe Kabelführungsvorrichtung mit einer mit der Decke 62 verbundenen Stützvorrichtung 2, die zwei Rücken an Rücken aneinander anliegende U-Profile 200A, 200B mit je zwei Hakenreihen 21 aufweist, an denen je eine Kabelbahn 1 befestigt und mit einem Verbindungselement 3 gehalten ist; und
- Fig. 4: die mittels Montageschrauben 8 mit der Decke 62 verbundene Stützvorrichtung 2 von Figur 3 von unten gesehen.

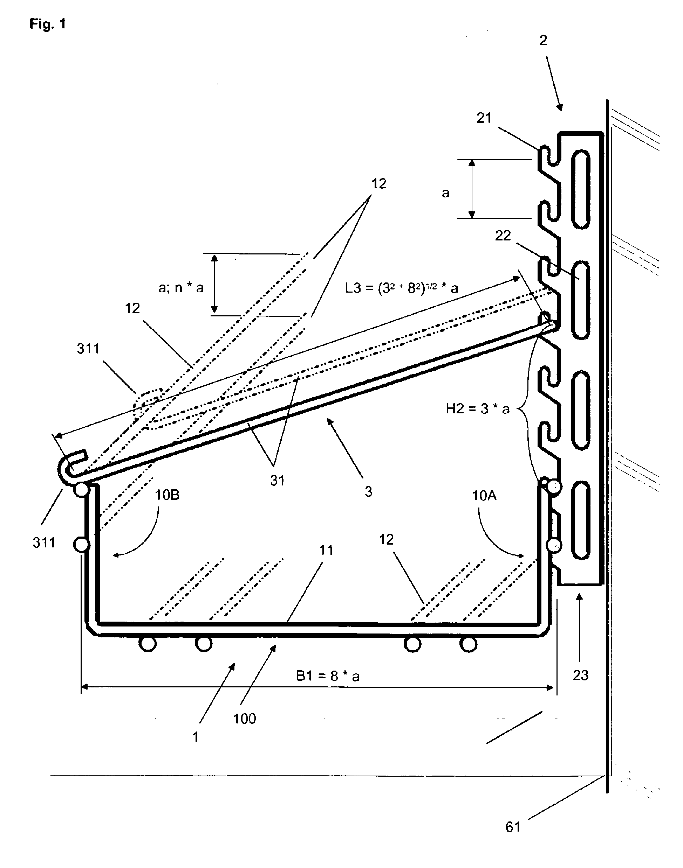

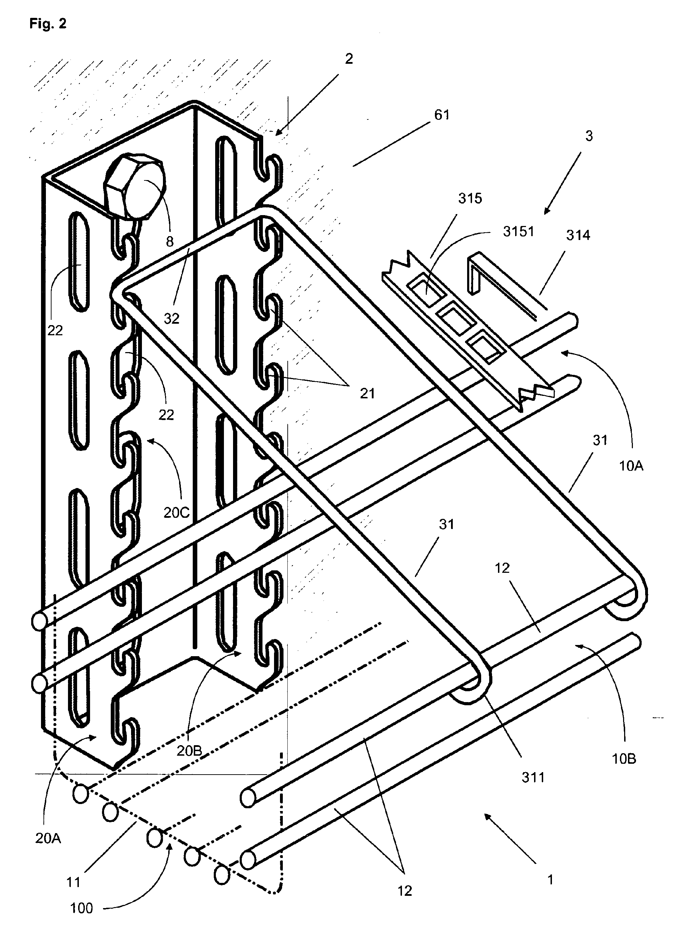

Figur 1 zeigt eine erfindungsgemässe Kabelführungsvorrichtung mit einer an einer Wand 61 montierten Stützvorrichtung 2, die mit zwei Reihen von Haken 21 sowie mit Öffnungen 22 versehen ist (siehe Figur 2).

Ferner gezeigt ist eine U-Profil-förmige Kabelbahn 1 mit einer Gitterstruktur, die durch Querstege 11 und Längsstege 12 gebildet ist. Die aufgeschnitten gezeigten Längsstege 12 liegen aussen an den Querstegen 11 an, die den Querschnitt der Kabelbahn 1 bzw. Gitterbahn bilden, welche ein Mittelteil 100 und zwei Seitenteile 10A, 10B aufweist.

Mit einem der Seitenteile 10A ist die Kabelbahn 1 in zwei Hakenreihen 21 eingehängt, die an zwei Schenkeln 20A, 20B der U-Profil-förmigen Stützvorrichtung 2 vorgesehen sind (siehe auch die Figur 2). Die Längsstege 12 der Kabelbahn 1 weisen dabei einen gegenseitigen Abstand auf, der dem Abstand a entspricht, mit dem die einzelnen Haken 21 der Schenkel 20A, 20B voneinander entfernt sind. Wie dies in Figur 1 gezeigt ist, werden die aussen an den Seitenteilen 10A, 10B vorgesehenen Längsstege 12 daher je von einem der Haken 21 gehalten, weshalb sich die einwirkende Last entsprechend aufteilt.

Das zweite Seitenteil 10B der Kabelbahn 1 ist mittels eines Verbindungselements 3 mit einem Haken 21 der Stützvorrichtung 2 verbunden, der um drei Hakenabstände a über dem Haken 21 liegt, mittels dessen der oberste Längssteg 12 des ersten Seitenteils 10A der Kabelbahn 1 gehalten ist. Dazu weist das Verbindungselement 3 an einem Ende zwei mit dem zweiten Seitenteil 10B der Kabelbahn 1 verbindbare erste Kopplungsstücke 311 und am anderen Ende ein oberhalb der Kabelbahn 1 in die Hakenreihen 21 der Stützvorrichtung 2 einfügbares zweites Kopplungsstück 32 auf.

In Figur 2 ist gezeigt, dass das Verbindungselement 1 in dieser vorzugsweisen Ausgestaltung ein einfach ausgestalteter, aus einem Draht gefertigter Metallbügel ist. Das dort gezeigte Verbindungselement 1 weist zwei frontseitig mit Kopplungsstücken 311 versehene, parallel zueinander ausgerichtete Arme 31 auf, die rückseitig mittels einer Querstrebe 32 miteinander verbunden sind. Diese Querstrebe 32 bildet das zweite Kopplungsstück 32 und kann in die beiden Hakenreihen 21 der Schenkel 20A, 20B eingehängt werden.

Besonders vorteilhaft ist die Verwendung von hakenförmigen Kopplungselementen 311, 32. Es sind jedoch beliebige Kopplungselemente verwendbar, die entsprechend den vorliegenden Bedürfnissen des Anwenders gewählt werden können. Beispielsweise können stabförmige Verbindungselemente 3 verwendet werden, die beidseits mit hakenförmigen Kopplungsstücken 311, 32 versehen sind, die gegebenenfalls auch in Öffnungen 22 an der Stützvorrichtung 1 und der Kabelbahn 1 eingreifen können.

Damit das Verbindungselement 1 einen hohen Anteil der Last aufnehmen kann, wird es vorzugsweise gegenüber dem Mittelteil 100 der Kabelbahn 1 in einem Winkel geneigt montiert, der in einem Bereich von 30°-60° liegt. In vielen Fällen dürfte bereits ein Winkel von 30° bis 45° genügen. Wie dies in Figur 1 gezeigt ist, kann die erforderliche Länge L3 des Verbindungselements 3 berechnet werden, wenn die Breite B1 der Kabelbahn 1 und der Abstand H2 der Haken 21 der Stützvorrichtung 2 bekannt ist, an denen einerseits das zweite Kopplungsstück 32 des Verbindungselements 3 und andererseits der entsprechende Längssteg 12 der Kabelbahn befestigt sind. Die Länge des Verbindungselements 3 ist dabei derart gewählt, dass der installierte Kabelkanal 1 zumindest annähernd waagerecht gehalten ist. In dem gezeigten Beispiel beträgt der genannte Abstand H2 das dreifache des Abstands a zwischen zwei benachbarten Haken 21. Die Breite B1 der Kabelbahn 1 beträgt hingegen das Achtfache des Hakenabstandes a. Die Länge L3 des Verbindungselements 3 ist daher (3² + 8²)^{1/2} a.

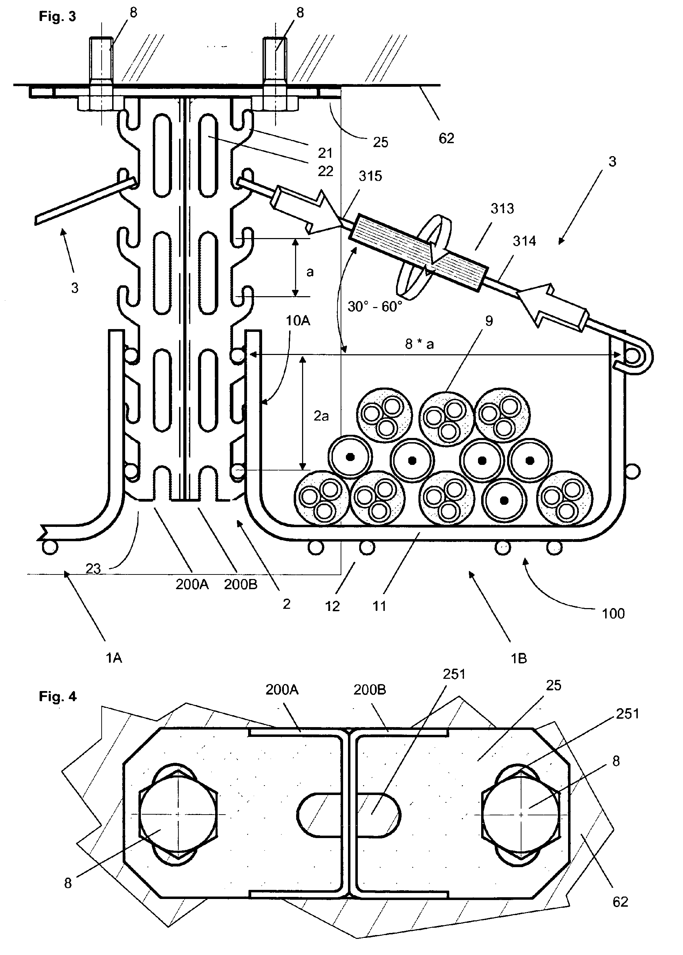

In vorzugsweisen Ausgestaltungen kann auch ein in der Länge justierbares Verbindungselement 3 vorgesehen werden. Dadurch kann das Verbindungselement 3 an gegebenenfalls nicht ideale Abmessungen der Kabelbahn 1 und der Stützvorrichtung 2 oder Fertigungstoleranzen angepasst werden. Beispielsweise werden die Arme 31 des Verbindungselements 3 in zwei Glieder 314, 315 unterteilt, die in passenden Abständen miteinander verbindbar sind. Das erste Glied 315 kann mit Öffnungen 3151 versehen werden, in die das zweite Glied 314 an passender Stelle eingehängt wird, wie dies in Figur 2 gezeigt ist. In einer weiteren vorzugsweisen Ausgestaltung sind die zwei je mit einem Gewinde versehenen Glieder 314, 315 in eine gemeinsam genutzte Gewindehülse 313 eingedreht. Durch Drehen der mit Innengewinden versehenen Gewindehülse 313 können die beiden Glieder 314, 315 gegeneinander gezogen werden, um die Kabelbahn 1 waagerecht auszurichten, wie dies in Figur 3 gezeigt ist.

Die in Figur 2 gezeigte Stützvorrichtung 1 ist ein metallenes U-Profil, welches ein Mittelstück 20C und rechtwinklig dazu ausgerichtete Schenkeln 20A, 20B aufweist, an denen je eine Reihe mit nach oben ausgerichteten Haken 21 vorgesehen ist. Die Stützvorrichtung 1 kann daher aus einer dünnen Metallplatte ausgestanzt und durch Abwinkeln der beiden Schenkel 20A, 20B relativ zum Mittelstück 20C fertig gestellt werden. Nebst den Haken 21 sind Öffnungen 22 vorgesehen, die bedarfsweise, insbesondere zur Durchführung von Montageschrauben 8, verwendbar sind.

Figur 3 zeigt eine erfindungsgemässe Kabelführungsvorrichtung mit einer mit der Decke 62 verbundenen Stützvorrichtung 2, die zwei Rücken an Rücken aneinander anliegende U-Profile 200A, 200B aufweist, die mit je zwei Hakenreihen 21 versehen sind. Beispielsweise können zwei Stücke der Stützvorrichtung 2 von Figur 2 verwendet und mit einem Kopfstück 25, beispielsweise einer Metallplatte, verschweisst werden. Diese für die Deckenmontage vorgesehene Stützvorrichtung 1 kann ebenfalls mit geringem Aufwand produziert und vorteilhaft genutzt werden. Beidseits dieser Stützvorrichtung 1 kann je eine Kabelbahn 1A bzw. 1B befestigt und der zur Verfügung stehende Raum somit optimal genutzt werden.

In Figur 3 ist ferner gezeigt, dass bei der dortigen Kabelbahn 1, in die Kabel 9 eingelegt sind, der Abstand der Längsstege 12 doppelt so gross ist, wie der Hakenabstand a. Aus Figur 3 ist ferner ersichtlich, dass die Kabelbahnen 1 derart montierbar sind, dass deren Mittelteil 100 unterhalb des unteren Endes 23 der Stützvorrichtung 1 liegt. In Figur 3 müssten die Kabelbahnen 1A, 1B um einen Hakenabstand nach unten verschoben werden. In diesem Fall sind von unten nur noch die beiden Kabelbahnen 1A, 1B optisch wahrnehmbar.

Figur 4 zeigt die mittels Montageschrauben 8 mit der Decke 62 verbundene Stützvorrichtung 2 von Figur 3 von unten gesehen. Dabei ist ersichtlich, dass die Montageplatte 25 drei verschiedene Öffnungen zur Durchführung von Montageschrauben 8 aufweist. Sofern die mit den Hakenreihen versehenen U-Profile 200A, 200B entsprechend ausgestaltet sind, kann auch nur eine Montageschraube 8 vorgesehen sein, die durch die mittlere Öffnung 251 hindurchgeführt wird.

## Patentansprüche

1. Kabelführungsvorrichtung mit einer der Aufnahme von Kabel dienenden Kabelbahn (1), die im Wesentlichen aus einem Mittelteil (100) sowie einem ersten und einem zweiten Seitenteil (10A; 10B) besteht, von denen das erste Seitenteil (10A) von einer Stützvorrichtung (2) gehalten ist, die mittels einer Montageschraube (8) an einer Wand (61) oder einer Decke (62) montierbar ist, **dadurch gekennzeichnet, dass** ein Verbindungselement (3) vorgesehen ist, das an einem ersten Ende wenigstens ein mit dem zweiten Seitenteil (10B) der Kabelbahn (1) verbindbares erstes Kopplungsstück (311) und an einem zweiten Ende wenigstens ein oberhalb der Kabelbahn (1) mit der Stützvorrichtung (2) verbindbares zweites Kopplungsstück (32) aufweist, und dessen Länge und Neigung derart gewählt sind, dass der installierte Kabelkanal (1) zumindest annähernd waagerecht gehalten ist.

2. Kabelführungsvorrichtung nach Anspruch 1, **dadurch gekennzeichnet, dass** die Kabelbahn (1)
a) eine Gitterstruktur aufweist, oder
b) einstückig aus gelochtem Blech gefertigt sind, oder
c) Seitenteile (10, 10B) aus Blech aufweist, die durch Metallstege miteinander verbunden sind.

3. Kabelführungsvorrichtung nach Anspruch 1 oder 2, **dadurch gekennzeichnet, dass** die Kabelbahn (1) durch eine Gitterstruktur aus miteinander verbundenen Quer- und Längsstegen gebildet ist, wobei die U-förmigen Querstege (11) den Kanalquerschnitt bestimmen und die Längsstege (12) zueinander parallele Befestigungsleisten bilden, die an drei Seiten aussen an den Querstegen (11) befestigt sind.

4. Kabelführungsvorrichtung nach Anspruch 3, **dadurch gekennzeichnet, dass** die Längsstege (12) wenigstens am ersten Seitenteil (10A) einen Abstand zueinander aufweisen, der gleich dem Hakenabstand (a) zweier benachbarter Haken (21) einer Hakenreihe oder einem ganzzahligen Vielfachen (n*a) davon ist.

5. Kabelführungsvorrichtung nach einem der Ansprüche 1 - 4, **dadurch gekennzeichnet, dass** die Stützvorrichtung (2) wenigstens ein U-Profil aufweist, dessen Schenkel (20A, 20B) zwei parallele Reihen mit Haken (21) bilden.

6. Kabelführungsvorrichtung nach Anspruch 5, **dadurch gekennzeichnet, dass** der Abstand zwischen den Schenkeln (20A, 20B) der Stützvorrichtung (2) derart bemessen ist, dass dazwischen zwei Querstege (11) einsetzbar sind, die in den Endbereichen von zwei stirnseitig aneinander gereihten Kabelbahnen (1) vorgesehen sind.

7. Kabelführungsvorrichtung nach Anspruch 5, **dadurch gekennzeichnet, dass** das Mittelteil (100) und das erste sowie das zweite Seitenteil (10A; 10B) zumindest annähernd ein U-Profil bilden.

8. Kabelführungsvorrichtung nach einem der Ansprüche 1 - 7, **dadurch gekennzeichnet, dass** die Stützvorrichtung (2) ein mit der Decke (62) verbindbares Kopfstück (25), vorzugsweise eine Montageplatte, aufweist und aus einem mit Haken (21) versehenen Profil oder aus zwei Rücken an Rücken aneinander anliegenden, mit Haken (21) versehenen Profilen (200A; 200B) gebildet ist.

9. Kabelführungsvorrichtung nach einem der Ansprüche 1 - 8, **dadurch gekennzeichnet, dass** das mit dem zweiten Seitenteil (10B) verbundene erste Kopplungsstück (311) des Verbindungselements (3) hakenförmig ausgestaltet und mit einem Element (12) des zweiten Seitenteils (10B) koppelbar ist und/oder dass das zweite Kopplungsstück (32) hakenförmig ausgestaltet ist und in einen Haken (21) oder in eine Öffnung (22) der Stützvorrichtung (2) eingreifen kann.

10. Kabelführungsvorrichtung nach einem der Ansprüche 1 - 9, **dadurch gekennzeichnet, dass** das Verbindungselement (3) zwei durch ein Mittelstück miteinander verbundene Arme (31) aufweist, an deren Enden die ersten Kopplungsstücke (31) vorgesehen sind, wobei das Mittelstück das zweite Kopplungsstück (32) ist, welches in eine Reihe oder in zwei Reihen von Haken (21) der Stützvorrichtung (2) eingehängt werden kann.

11. Kabelführungsvorrichtung nach einem der Ansprüche 1 - 10, **dadurch gekennzeichnet, dass** das vorzugsweise U-Profil-förmige Verbindungselement (3) aus einem drahtförmigen Metallstück oder aus einem plattenförmigen Metallstück geformt ist.

12. Kabelführungsvorrichtung nach einem der Ansprüche 1 - 11, **dadurch gekennzeichnet, dass** der oder die Arme (31) des installierten Verbindungselements (3) gegenüber dem Mittelteil (100) der Kabelbahn (1) in einem Winkel geneigt ist, der in einem Bereich von 30°-60° liegt.

13. Kabelführungsvorrichtung nach einem der Ansprüche 1 - 12, **dadurch gekennzeichnet, dass** der oder die Arme (31) des installierten Verbindungselements (3) in der Länge veränderbar sind.

14. Kabelführungsvorrichtung nach Anspruch 13, **dadurch gekennzeichnet, dass** der oder die Arme (31) des installierten Verbindungselements (3) aus zwei vorzugsweise mit Aussengewinden versehenen Teilen (314, 315) bestehen, die in unterschiedlichen gegenseitigen Abständen miteinander koppelbar sind, oder mittels einer Gewindehülse (313) miteinander verschraubbar sind.

## Claims

1. Cable guiding device with a cable tray (1) serving for the accommodation of cable, consisting essentially of a central part (100) and a first and a second side part (10A; 10B), of which the first side part (10A) is held by a support device (2), which can be mounted by means of a mounting screw (8) on a wall (61) or a ceiling (62), **characterised in that** a connecting element (3) is provided, which comprises on a first end at least one first coupling piece (311), which can be coupled to the second side part (10B) of the cable tray (1), and on a second end at least one second coupling piece (32), which can be connected above the cable tray (1) with the support device (2), and whose length and inclination are selected in such a way that the installed cable tray (1) is held at least approximately horizontally.

2. Cable guiding device according to claim 1, **characterised in that** the cable tray (1)
a) comprises a grid structure, or
b) is manufactured as one piece from perforated sheet metal, or
c) comprises side parts (10, 10B) of sheet metal, which are connected with one another by metal bars.

3. Cable guiding device according to claim 1 or 2, **characterised in that** the cable tray (1) incorporates a grid structure of interconnected transverse bars and longitudinal bars, wherein the U-shaped transverse bars (11) determine the channel-cross-section and wherein the longitudinal bars (12) form mounting strips running in parallel to one another, which are mounted on three sides outwards on the transverse bars (11).

4. Cable guiding device according to claim 3, **characterised in that** the longitudinal bars(12) exhibit at least on the first side part (10A) a distance to one another, which is equal to the hook distance (a) of two neighbouring hooks (21) of a row of hooks or an integral multiple of (n * a) thereof.

5. Cable guiding device according to one of the claims 1 - 4, **characterised in that** the support device (2) comprises at least one U-profile, whose legs (20A, 20B) form two parallel rows of hooks (21).

6. Cable guiding device according to claim 5, **characterised in that** the distance between the legs (20A, 20B) of the support device (2) is dimensioned such that there in between two transverse bars (11) can be inserted, which are provided in the end regions of two cable trays (1) that are arranged face-to-face.

7. Cable guiding device according to claim 5, **characterised in that** the central part (100) and the first as well as the second side part (10A; 10B) form at least approximately a U-profile.

8. Cable guiding device according to one of the claims 1 - 7, **characterised in that** the support device (2) comprises a head piece (25), preferably a mounting plate, which can be connected to the ceiling (62), and consists of a profile that is provided with hooks (21) or of two profiles (200A; 200B) that abut one to another back-to-back and that are provided with hooks (21).

9. Cable guiding device according to one of the claims 1 - 8, **characterised in that** the first coupling piece (311) of the connecting element (3), which is connected to the second side part (10B), is designed as a hook and can be coupled with an element (12) of the second side part (10B) and/or that the second coupling piece (32) is designed as a hook and can engage in a hook (21) or in an opening (22) of the support device (2).

10. Cable guiding device according to one of the claims 1 - 9, **characterised in that** the connecting element (3) comprises two arms (31), which are connected with one another by a central piece and whose ends the first coupling pieces (31) are provided, wherein the central piece is the second coupling piece (32), which can be hung into one row or into two rows of hooks (21) of the support device (2).

11. Cable guiding device according to one of the claims 1 - 10, **characterised in that that** the preferably U-profile-shaped connecting element (3) is formed from a wire-shaped piece of metal or from a plate-shaped metal piece.

12. Cable guiding device according to one of the claims 1 - 11, **characterised in that** the one or two arms (31) of the installed connecting element (3) is inclined against the central part (100) of the cable tray (1) in an angle, which lies in the range of 30°-60°.

13. Cable guiding device according to one of the claims 1 - 12, **characterised in that** the one or two arms (31) of the installed connecting element (3) are adjustable in length.

14. Cable guiding device according to claim 13, **characterised in that** the one or two arms (31) of the installed connecting element (3) consist of two parts (314, 315), that are preferably provided with an external thread and that can be coupled in different mutual distances, or can be connected by means of a threaded sleeve (313).

## Revendications

1. Dispositif de guidage de câbles avec un chemin de câbles (1) servant au logement de câbles qui se compose sensiblement d'une partie médiane (100) ainsi que d'une première et d'une seconde partie latérale (10A; 10B) dont la première partie latérale (10A) est maintenue par un dispositif support (2) qui est montable au moyen d'une vis de montage (8) sur un mur (61) ou un plafond (62), **caractérisé en ce qu'**il est prévu un élément de liaison' (3) qui présente sur une première extrémité au moins une première pièce d'accouplement (311) reliable à la seconde partie latérale (10B) du chemin de câbles (1) et sur une seconde extrémité au moins une seconde pièce d'accouplement (32) reliable au-dessus du chemin de câbles (1) au dispositif de soutien (2) et dont la longueur et l'inclinaison sont sélectionnées de sorte que le chemin de câbles (1) installé est au moins maintenu approximativement horizontalement.

2. Dispositif de guidage de câble selon la revendication 1, **caractérisé en ce que** le chemin de câbles (1)
a) présente une structure de grille ou
b) est fabriqué d'une seule pièce en tôle perforée, ou
c) présente des parties latérales (10, 10B) en tôle qui sont reliées entre elles par des âmes métalliques.

3. Dispositif de guidage de câbles selon la revendication 1 ou 2, **caractérisé en ce que** le chemin de câbles (1) est formé par une structure de grille composée d'âmes transversales et longitudinales reliées entre elles, les âmes transversales en forme de U (11) définissant la section transversale du chemin et les âmes longitudinales (12) formant des barres de fixation parallèles entre elles, qui sont fixées sur trois côtés à l'extérieur aux âmes transversales (11).

4. Dispositif de guidage de câbles selon la revendication 3, **caractérisé en ce que** les âmes longitudinales (12) présentent au moins sur la première partie latérale (10A) une distance entre elles qui est égale la distance (a) entre deux crochets voisins (21) d'une rangée de crochets ou bien d'un multiple entier (n*a).

5. Dispositif de guidage de câbles selon l'une des revendications 1 à 4, **caractérisé en ce que** le dispositif de soutien (2) présente au moins un profilé en U dont les branches (20A, 20B) forment deux rangées parallèles avec des crochets (21).

6. Dispositif de guidage de câbles selon la revendication 5, **caractérisé en ce que** la distance entre les branches (20A, 20B) du dispositif de soutien (2) est mesurée de sorte qu'entre ces dernières, deux âmes transversales (11) sont insérables, qui sont prévues dans les zones d'extrémités de deux chemins de câbles (1) alignés l'un à côté de l'autre sur la face frontale.

7. Dispositif de guidage de câbles selon la revendication 5, **caractérisé en ce que** la partie médiane (100) et la première ainsi que la seconde partie latérale (10A; 10B) forment au moins approximativement un profilé en U.

8. Dispositif de guidage de câbles selon l'une des revendications 1 à 7, **caractérisé en ce que** le dispositif de soutien (2) présente une pièce de tête (25), de préférence une plaque de montage, reliable au plafond (62) et qui est formé d'un profilé muni de crochets (21) ou des deux profilés (200A; 200B) munis de crochets (21) et étant appliqués l'un contre l'autre dos à dos.

9. Dispositif de guidage de câbles selon l'une des revendications 1 à 8, **caractérisé en ce que** la première pièce d'accouplement (311) de l'élément de liaison (3) reliée à la seconde partie latérale (10B), a une forme de crochet et est reliée à un élément (12) de la seconde partie latérale (10B) et/ou **en ce que** la seconde pièce d'accouplement (32) est réalisée en forme de crochet et peut s'engager dans un crochet (21) ou dans une ouverture (22) du dispositif de soutien (2).

10. Dispositif de guidage de câble selon l'une des revendications 1 à 9, **caractérisé en ce que** l'élément de liaison (3) présente deux bras (31) reliés entre eux par une pièce médiane, bras aux extrémités desquels sont prévues les premières pièces d'accouplement (31), la pièce médiane étant la seconde pièce d'accouplement (32) qui peut être accrochée dans une rangée ou dans deux rangées de crochets (21) du dispositif de soutien (2).

11. Dispositif de guidage de câble selon l'une des revendications 1 à 10, **caractérisé en ce que** l'élément de liaison (3) de préférence en forme de U est formé à partie d'une pièce de métal en forme de fil métallique ou d'une pièce de métal en forme de plaque.

12. Dispositif de guidage de câble selon l'une des revendications 1 à 11, **caractérisé en ce que** le ou les bras (31) de l'élément de liaison (3) installé sont inclinés par rapport à la partie médiane (100) du chemin de câbles (1) selon un angle compris entre 30° et 60°.

13. Dispositif de guidage de câble selon l'une des revendications 1 à 11, **caractérisé en ce que** le ou les bras (31) de l'élément de liaison (3) installé sont modifiables en longueur.

14. Dispositif de guidage de câble selon l'une des revendications 1 à 11, **caractérisé en ce que** le ou les bras (31) de l'élément de liaison (3) installé se composent de préférence de parties qui sont munies de filetages externes (314, 315) et qui sont accouplables entre elles à des distances réciproques différentes ou sont vissables entre elles au moyen d'une gaine filetée (313).
